# EUROPEAN PATENT SPECIFICATION

(11) **EP 1 288 115 B1**
(45) Date of publication and mention of the grant of the patent: **15.08.2007**
(21) Application number: 02078583.8
(22) Date of filing: 02.09.2002
(51) Int. Cl.: B62D 25/06

(54) **Roof panel liner for a vehicule with side and front shock absorbers obtained in the same forming operation**
Dachhimmel für ein Fahrzeug mit integrierten Seiten- und Frontdämpfer , hergestellt in einer und derselben Operation
Pavillon de véhicule avec amortisseurs de coté et à l'avant incorporés, fabriqués en une même opération

(30) Priority: 03.09.2001 IT MI20011852
(43) Date of publication of application: 05.03.2003
(73) Proprietor: Industrialesud S.p.A., 64100 Teramo (IT)
(72) Inventor: Di Sante, Giuseppe, 64026 Roseto Degli Abruzzi (Teramo) (IT); Biggio, Mario, 64026 Roseto Degli Abruzzi (Teramo) (IT); D'Ambrosio, Patrizio, 64026 Roseto Degli Abruzzi (Teramo) (IT); Bessone, Giovanni, 12089 Villanova Mondovi' (Cuneo) (IT)
(74) Representative: De Gregori, Antonella

(56) References cited:
- EP-A- 0 846 583
- US-A- 5 186 517
- US-A- 5 823 611

## Description

The present invention refers to a roof panel coating for a vehicle with side and front shock absorbers obtained in the same forming operation.

In the sector of the automobile industry in particular, it is necessary, for each component to be produced or to be assembled, to optimise to the maximum the manufacturing and assembly costs, also increasing the overall reliability of the vehicle as much as possible.

Therefore, in each application, it is desirable to foresee the assembly of simple and functional elements, in extremely short periods of time with respect to the prior art and according to simple and reliable methods.

Finally, each mounted element must be able to constitute a valid solution to the problem of the spaces available both inside the vehicle itself and in the adjacent spaces (such as the baggage compartment of a vehicle).

Furthermore it is necessary that any assembly of the components for automobiles be carried out correctly and that each assembled component be extremely accessible to the end user to allow maintenance, repair or replacement interventions thereof, thus also increasing the overall functionality of the vehicle.

In particular, the realisation of a roof panel coating for a vehicle usually involves an awkward positioning thereof with respect to the structure of the vehicle and also has clear construction and assembly problems, above all due to the fact that the individual side and front shock absorbers of the vehicle are realised prior to and after the assembly step of the roof panel coating, with clear problems of the space occupied in the packaging containers and manufacturing times of the entire coating.

Document US 5,823,611 on which disclosure the preamble features of claim 1 are based describes a roof panel coating including one or more integrally formed flaps extending from an edge of the headliner and integrally hinged to the edge of the headliner to fold over the top of the headliner and be concealed in the area between the headliner and vehicle sheet metal roof.

The flaps are directly connected to the edge of the headliner, so that, once folded over, the flaps are positioned in correspondence of the perimeter of the headliner.

Document US 5,186,517 describes a headliner including a central portion with a perimeter and a folded edge portion connected to the perimeter that presents a finished side along the perimeter so that the headliner can be installed into the vehicle roof without subsequent parts required to cover the perimeter.

The purpose of the present invention is, therefore, that of eliminating the aforementioned drawbacks, realising a roof panel coating of a vehicle with side and front shock absorbers obtained in the same forming operation, which allows the realisation times thereof to be limited, maintaining a substantial reliability and efficiency of the entire construction and assembly procedure.

Another purpose of the preser.t invention is that of realising a roof panel coating of a vehicle with side and front shock absorbers obtained in the same forming operation, which is particularly simple to construct and which allows a substantial reduction in total costs, both for production and for storage and/or for assembly.

A further purpose of the present invention is that of indicating a roof panel coating of a vehicle with side and front shock absorbers obtained in the same forming operation, which is extremely efficient even against collisions which can happen to the vehicle.

The last but not least purpose of the invention is that of realising a roof panel coating of a vehicle with side and front shock absorbers obtained in the same forming operation which is simpler and safer, as well as efficient and extremely reliable, with respect to roof panel coatings realised according to the prior art.

These and other purposes, according to the present invention, are achieved by realising a roof panel coating of a vehicle with side and front shock absorbers obtained in the same forming operation according to claim 1, to which we refer for the sake of brevity.

Further characteristics and advantages of a roof panel coating of a vehicle with side and front shock absorbers obtained in the same forming operation, according to the present invention, shall become clearer from the following description, given as an example and not for limiting purposes, referring to the attached schematic drawings, in which:
- figure 1 is a perspective and schematic view of a roof panel coating of a vehicle with side and front shock absorbers obtained in the same forming operation, according to the present invention;
- figure 2 is a section view made in correspondence with the line II-II of figure 1, according to a first embodiment of the shock absorber encased in the roof panel coating of the present invention;
- figure 3 is a section view made in correspondence with the line II-II of figure 1, according to a further embodiment of the shock absorber, which is encased in the roof panel coating, according to the present invention.

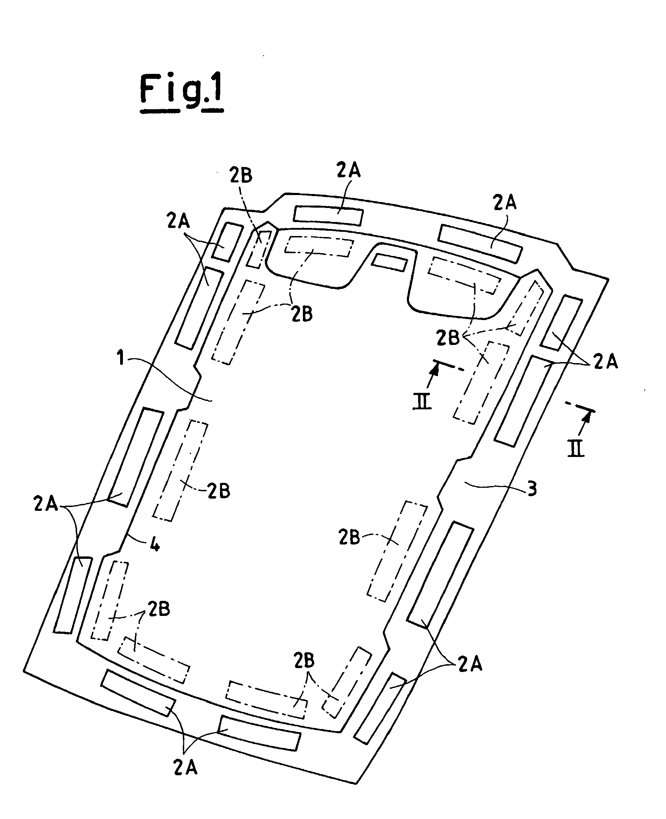

With reference to the aforementioned figures, a roof panel coating of a vehicle with side and front shock absorbers obtained in the same forming operation, according to the present invention, is generically indicated with 1 in the attached figure 1.

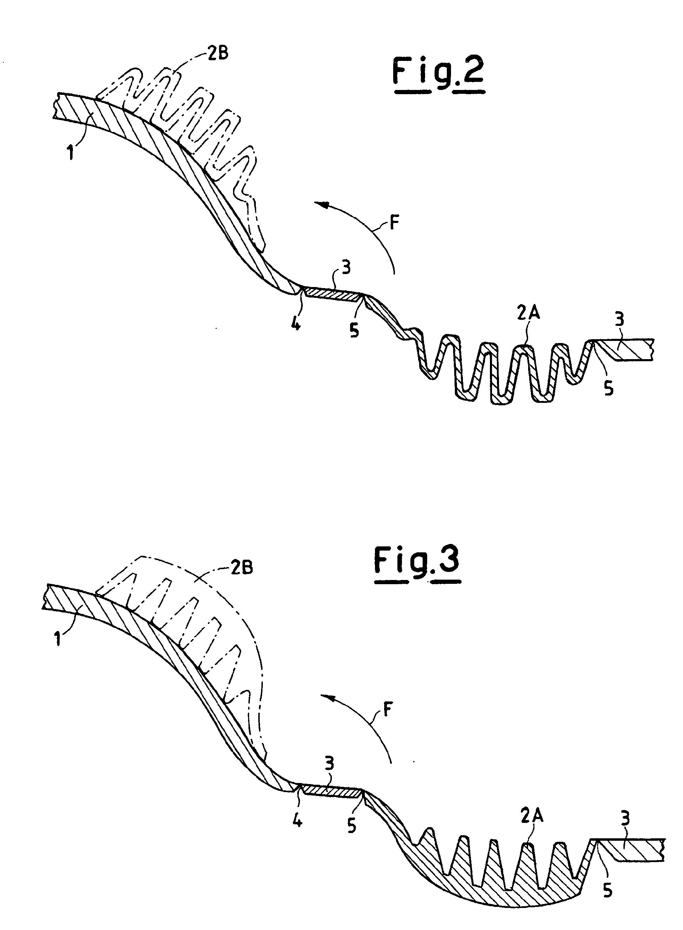

The perspective view of figure 1 shows the various elements of the invention in flat perspective position, whereas the section views of figures 2 and 3 allow a better understanding of the reciprocal positioning of the parts in moulding position and with the moulding completed.

The roof panel coating includes the die of the mould, indicated with 3, and the shock absorber, indicated with 2A in moulding position.

In the section view of figures 2 and 3, the cutting lines of the roof panel coating 1 and of the shock absorber 2A are indicated, respectively, with the numbers 4 and 5; in such a case, reference number 4 also indicates the rotational axis of the operation carried out with moulding completed.

Indeed, with moulding completed, provided adhesive has been applied on the rear of the roof panel coating 1, the rotation indicated by the arrow F of the die of the mould 3 and of the shock absorber 2A is carried out on the axis 4 until contact is obtained with the roof panel coating 1 and, then, with gluing completed, the trimming of the roof panel coating 1 and of the shock absorbers 2A is carried out into their end positions 2B on the lines 4 and 5, removing the die of the mould 3.

The width of the die of the mould 3 is variable according to the final positioning of the shock absorber 2A on the roof panel coating 1.

Finally, figure 3 represents a possible alternative shape of the shock absorber 2A to that of figure 2.

In such a way, it is possible to provide the end user with the roof panel coating 1 and the side and front shock absorbers 2A realised using the same material as the coating 1, obtaining a substantial reduction in the final production costs.

In fact, according to the present invention, the side and front shock absorbers 2A are obtained during the same forming operation of the roof panel coating 1 in the zone of the die of the mould 3 and are positioned through a rotation of about 180° on the axis of the vehicle, with respect to the final gluing position.

Finally, it should be remembered that the number, the shape and the position of the side and front shock absorbers 2A can be variable according to the vehicle upon which they are mounted and is such as to guarantee the respect of the applicable regulations of the various European and non-European countries.

Therefore, it has been possible to note how the roof panel coating 1, according to the present invention, is particularly functional, simple and fast to realise and to install.

Moreover, it allows a substantial reduction in the total costs to be obtained being able to provide the end customer with the roof panel coating 1 and the side and front shock absorbers 2A realised with the same material.

From the description which has been made the characteristics of the roof panel coating of a vehicle with side and front shock absorbers obtained in the same forming operation, according to the present invention, are clear, just as the advantages are also clear.

Finally, it is clear that further modifications and variants can be brought to the roof panel coating in question, within the scope of the appended claims.

It is clear that the materials and the sizes shown can be varied according to the technical requirements.

## Claims

1. Roof panel coating (1) for a vehicle in which a plurality of side and front shock absorbers (2A) are obtained in the same forming operation of the roof panel (1) in the zone of the die of the mould (3) and are positioned, through a rotation of about 180°, on the axis of the vehicle (4) with respect to the final gluing position **characterised in that** said coating includes the die of the mould (3) and at least one of said shock absorbers (2A) in the moulding step.

2. Roof panel coating (1) according to claim 1, **characterised in that** at least one cutting line (4, 5) of the roof panel coating (1) and of each shock absorber (2A) also constitutes a rotational axis (4) of the operation carried out with moulding completed.

3. Roof panel coating (1) according to claim 2, **characterised in that**, with moulding completed, providing adhesive has been applied on the rear of said roof panel coating (1), a rotation (F) is carried out of said die of the mould (3) and of at least one shock absorber (2A) on said rotational axis (4) until contact is obtained with said roof panel coating (1).

4. Roof panel coating (1) according to claim 3, **characterised in that**, with gluing completed, the trimming of said roof panel coating (1) and of said shock absorbers (2A) is carried out in their end positions (2B) on said cutting lines (4, 5), removing the die of the mould (3).

5. Roof panel coating (1) according to claim 1, **characterised in that** said die of the mould (3) has a variable width according to the final positioning of said shock absorber (2A) on the roof panel coating (1).

6. Roof panel coating (1) according to claim 1, **characterised in that** said shock absorber (2A) is variously shaped.

7. Roof panel coating (1) according to claim 1, **characterised in that** it can be provided to the end client together with said side and front shock absorbers (2A), which are realised using the same material as the roof panel coating (1), said side and front shock absorbers (2A) being obtained during the same forming operation of the roof panel coating (1) in the zone of the die of the mould (3) and being positioned through a rotation of about 180° on the axis (4) of the vehicle, with respect to the final gluing position.

## Patentansprüche

1. Dachblechbeschichtung (1) für ein Fahrzeug, bei der eine Vielzahl von Seiten- und Frontstoßdämpfern (2A) in demselben Formvorgang des Dachblechs (1) in der Zone des Stempels der Form (3) erhalten und durch eine Rotation um etwa 180° an der Achse des Fahrzeugs (4) bezüglich der endgültigen Klebeposition positioniert werden, **dadurch gekennzeichnet, dass** die Beschichtung den Stempel der Form (3) und zumindest einen der Stoßdämpfer (2A) in dem Formschritt aufweist.

2. Dachblechbeschichtung (1) nach Anspruch 1, **dadurch gekennzeichnet, dass** zumindest eine Schnittlinie (4, 5) der Dachblechbeschichtung (1) und jedes Stoßdämpfers (2A) auch eine Rotationsachse (4) des bei Beendigung der Formung ausgeführten Vorgangs bildet.

3. Dachblechbeschichtung (1) nach Anspruch 2, **dadurch gekennzeichnet, dass** bei beendeter Formung, vorausgesetzt, dass Klebstoff auf die Rückseite der Dachblechbeschichtung (1) aufgebracht worden ist, eine Rotation (F) des Stempels der Form (3) und zumindest eines Stoßdämpfers (2A) an der Rotationsachse (4) ausgeführt wird, bis ein Kontakt mit der Dachblechbeschichtung (1) erhalten wird.

4. Dachblechbeschichtung (1) nach Anspruch 3, **dadurch gekennzeichnet, dass** bei beendetem Kleben das Zurichten der Dachblechbeschichtung (1) und der Stoßdämpfer (2A) an ihren Endpositionen (2B) an den Schnittlinien (4, 5) ausgeführt wird, wobei der Stempel der Form (3) entfernt wird.

5. Dachblechbeschichtung (1) nach Anspruch 1, **dadurch gekennzeichnet, dass** der Stempel der Form (3) eine variable Breite gemäß der endgültigen Positionierung des Stoßdämpfers (2A) an der Dachblechbeschichtung (1) aufweist.

6. Dachblechbeschichtung (1) nach Anspruch 1, **dadurch gekennzeichnet, dass** der Stoßdämpfer (2A) verschieden geformt ist.

7. Dachblechbeschichtung (1) nach Anspruch 1, **dadurch gekennzeichnet, dass** sie an den Endkunden zusammen mit den Seiten-und Frontstoßdämpfern (2A) geliefert werden kann, die unter Verwendung desselben Materials wie der Dachblechbeschichtung (1) ausgeführt sind, wobei die Seiten- und Frontstoßdämpfer (2A während desselben Formvorgangs der Dachblechbeschichtung (1) in der Zone des Stempels der Form (3) erhalten werden und durch eine Rotation von etwa 180° an der Achse (4) des Fahrzeugs bezüglich der endgültigen Klebeposition positioniert werden.

## Revendications

1. Revêtement de panneau de toit (1) pour véhicule dans lequel une pluralité d'amortisseurs latéraux et avant (2A) sont obtenus dans la même opération de formage du panneau de toit (1) dans la zone de la matrice du moule (3) et sont positionnés, par une rotation d'environ 180°, sur l'axe du véhicule (4) par rapport à la position de collage finale, **caractérisé en ce que** ledit revêtement inclut la matrice du moule (3) et au moins l'un desdits amortisseurs (2A) dans l'étape de moulage.

2. Revêtement de panneau de toit (1) selon la revendication 1, **caractérisé en ce qu'**au moins une ligne de coupe (4, 5) du revêtement de panneau de toit (1) et de chaque amortisseur (2A) constitue aussi un axe de rotation (4) de l'opération effectuée avec le moulage achevé.

3. Revêtement de panneau de toit (1) selon la revendication 2, **caractérisé en ce que**, avec le moulage achevé, à condition qu'un adhésif ait été appliqué sur l'arrière dudit revêtement de panneau de toit (1), une rotation (F) de ladite matrice du moule (3) et d'au moins un amortisseur (2A) sur ledit axe de rotation (4) est exécutée jusqu'à entrer au contact dudit revêtement de panneau de toit (1).

4. Revêtement de panneau de toit (1) selon la revendication 3, **caractérisé en ce que**, avec le collage achevé, l'ébavurage dudit revêtement de panneau de toit (1) et desdits amortisseurs (2A) est exécuté dans leurs positions d'extrémité (2B) sur lesdites lignes de coupe (4, 5), en retirant la matrice du moule (3).

5. Revêtement de panneau de toit (1) selon la revendication 1, **caractérisé en ce que** ladite matrice du moule (3) a une largeur variable selon le positionnement final dudit amortisseur (2A) sur le revêtement de panneau de toit (1).

6. Revêtement de panneau de toit (1) selon la revendication 1, **caractérisé en ce que** ledit amortisseur (2A) est de forme variée.

7. Revêtement de panneau de toit (1) selon la revendication 1, **caractérisé en ce qu'**il peut être fourni au client final en même temps que lesdits amortisseurs latéraux et avant (2A), qui sont réalisés en employant le même matériau que le revêtement de panneau de toit (1), lesdits amortisseurs latéraux et avant (2A) étant obtenus pendant la même opération de formage du revêtement de panneau de toit (1) dans la zone de la matrice du moule (3) et étant positionnés par le biais d'une rotation d'environ 180° sur l'axe (4) du véhicule, par rapport à la position de collage finale.
